# EUROPÄISCHE PATENTSCHRIFT

(11) **EP 2 300 269 B1**
(45) Veröffentlichungstag und Bekanntmachung des Hinweises auf die Patenterteilung: **03.05.2017**
(21) Anmeldenummer: 09753679.1
(22) Anmeldetag: 28.05.2009
(51) Int. Cl.: B60Q 1/20, B60Q 1/28, F21S 8/10, F21Y 105/10, F21Y 113/10

(54) **FAHRZEUGBELEUCHTUNGSVORRICHTUNG MIT MINDESTENS ZWEI HALBLEITER-LEUCHTELEMENTEN**
VEHICLE LIGHTING DEVICE WITH AT LEAST TWO SEMICONDUCTOR LAMP ELEMENTS
DISPOSITIF D ÉCLAIRAGE DE VÉHICULE AVEC AU MOINS DEUX ÉLÉMENTS D ÉCLAIRAGE SEMI-CONDUCTEURS

(30) Priorität: 28.05.2008 DE 102008025397
(43) Veröffentlichungstag der Anmeldung: 30.03.2011
(73) Patentinhaber: OSRAM GmbH, 80807 München (DE)
(72) Erfinder: HERING, Oliver, 89168 Niederstotzingen (DE); TROMMER, Jenny, 89522 Heidenheim (DE); REINERS, Thomas, 89429 Bachhagel (DE)
(74) Vertreter: Schulze, Mark
(86) Internationale Anmeldenummer: PCT/EP2009/003827
(87) Internationale Veröffentlichungsnummer: WO 2009/144024

(56) Entgegenhaltungen:
- EP-A- 1 637 397
- WO-A-2006/034329
- DE-A1- 10 308 703
- DE-A1-102006 015 117
- DE-A1-102006 021 694
- DE-A1-102008 013 603
- US-A1- 2001 019 486
- US-A1- 2006 007 697
- US-A1- 2008 062 706
- US-A1- 2009 129 083

## Beschreibung

Die Erfindung betrifft eine Fahrzeugbeleuchtungsvorrichtung mit mindestens zwei Halbleiter-Leuchtelementen, insbesondere Leuchtdioden, sowie ein Fahrzeug mit mindestens einer solchen Fahrzeugbeleuchtungsvorrichtung.

Bisher werden meist für verschiedene Beleuchtungsfunktionen eines Fahrzeugs wie Tagfahrlicht, Fernlicht, Nebellicht und Kurvenlicht unterschiedliche Scheinwerferlampen verwendet, denen zudem häufig eine jeweilige nachgeschalteten Optik zugeordnet ist. Zur Kostenverringerung und zur Einsparung von Bauraum wird versucht, die Zahl und Größe der Scheinwerferlampen zu reduzieren, ohne eine Funktionstüchtigkeit des Scheinwerfers zu verringern. Dazu sind beispielsweise Biluxlampen oder Bi-Xenon-Scheinwerfer bekannt, von denen sowohl Abblendlicht als auch Fernlicht erzeugt wird. Bei dem Bi-Xenon-Scheinwerfer wird lediglich eine Blende aus dem Strahlengang geklappt und damit auf Fernlicht "umgeschaltet". Es ist ferner eine Biluxlampe zur Kombination von Tagfahrlicht und Nebellicht bekannt.

US 2001/019486 A1 offenbart eine Beleuchtungseinrichtung für ein Fahrzeug, das weist eine Vielzahl von in einer Matrix verteilten Halbleiterlichtquellen und mindestens ein optisch aktives Element, das in einem Strahlengang eines von den Halbleiterquellen emittierten Lichtstrahls liegt, auf, wobei die Halbleiterquellen in verschiedenen Teilbereichen der Matrix angeordnet sind und wobei die Halbleiterquellen der Teilbereichen unabhängig voneinander betreibbar sind.

Es ist die Aufgabe der vorliegenden Erfindung, eine weitere Möglichkeit zur Verringerung eines Platzbedarfs und von Kosten bei der Fahrzeugbeleuchtung bereitzustellen.

Diese Aufgabe wird mittels einer Fahrzeugbeleuchtungsvorrichtung nach Anspruch 1 gelöst. Bevorzugte Ausführungsformen sind insbesondere den abhängigen Ansprüchen entnehmbar.

Die Fahrzeugbeleuchtungsvorrichtung weist mindestens zwei Halbleiter-Leuchtelemente auf, und zwar mindestens eine erste Leuchtelement-Gruppe und eine zweite Leuchtelement-Gruppe mit jeweils mindestens einem Halbleiter-Leuchtelement, wobei die Leuchtelement-Gruppen selektiv, d. h. ausgewählt und unabhängig voneinander, ansteuerbar sind. Ferner weist mindestens die erste Leuchtelementgruppe mindestens eine Nebellichtfunktion auf. Die Fahrzeugbeleuchtungsvorrichtung weist also mehrere Leuchtelemente auf, die sich in mindestens zwei verschiedenen Beleuchtungs- bzw. Leuchtkonfigurationen betreiben lassen, von denen zumindest eine zur Erzeugung eines Nebellichts geeignet ist. Eine Leuchtkonfiguration kann beispielsweise einen An/Aus-Zustand und / oder einen vorbestimmten Leuchtstärkezustand umfassen. Der Leuchtstärkezustand lässt sich beispielsweise durch Einstellung eines Betriebsstroms durch das Leuchtelement erreichen, z. B. anhand einer PulsDauer bei Betrieb in einer Puls-Weiten-Modulation, und so weiter. Die erste Leuchtelementgruppe erzeugt dabei zumindest einen Teil eines Nebellichts bzw. strahlt ein solches ab, möglicherweise zusammen mit mindestens einer anderen Leuchtelement-Gruppe der Fahrzeugbeleuchtungsvorrichtung, die eine Nebellichtfunktion aufweist.

Ferner sind das mindestens eine Halbleiter-Leuchtelement der ersten Leuchtelement-Gruppe und das mindestens eine Halbleiter-Leuchtelement der zweiten Leuchtelement-Gruppe gruppenweise verdrahtet.

Durch eine solche Vorrichtung lassen sich auf einfache und kostengünstige Weise mehrere Lichtfunktionen einschließlich einer Nebellichtfunktion und einer Tagfahrlichtfunktion in einer Fahrzeugbeleuchtungsvorrichtung integrieren, was Platz und Kosten spart.

Dass die erste Leuchtelement-Gruppe und die zweite Leuchtelement-Gruppe eine Tagfahrlichtfunktion aufweisen, die Vorrichtung also eine Tagfahrlichtfunktion aufweist, welche durch Aktivierung der ersten Leuchtelement-Gruppe und der zweiten Leuchtelement-Gruppe bereitgestellt wird, bewirkt auch eine höheren Integration von Beleuchtungsarten. In anderen Worten können die erste Leuchtelement-Gruppe und die zweite Leuchtelement-Gruppe (und gegebenenfalls weitere Leuchtelement-Gruppen mit Tagfahrlichtfunktion) bei entsprechender Aktivierung ein Tagfahrlicht (DRL; "Daytime Running Light") erzeugen. Die erste Leuchtelement-Gruppe weist also mindestens zwei Funktionen auf, nämlich zur Erzeugung eines Nebellichts und zur Erzeugung eines Tagfahrlichts, während die zweite Leuchtelement-Gruppe mindestens eine Tagfahrlichtfunktion aufweist. Bei Aktivierung der Tagfahrlichtfunktion sind also die erste Leuchtelement-Gruppe und die zweite Leuchtelement-Gruppe gemeinsam aktiviert.

Es wird dann zur Vermeidung einer Blendung anderer Verkehrsteilnehmer bevorzugt, wenn die erste Leuchtelement-Gruppe während der Aktivierung der Tagfahrlichtfunktion mit geringerer Leuchtstärke leuchtet als bei einer Aktivierung der Nebellichtfunktion. Dies kann beispielsweise durch Verringern der Leuchtstärke jeder der zugehörigen Leuchtelemente geschehen ("dimmen").

Es wird zur Erreichung einer guten Sichtbarkeit insbesondere bevorzugt, wenn die zweite Leuchtelement-Gruppe in der Tagfahrlichtfunktion einen Bereich ausleuchtet, der in einem Dunkelbereich der Nebellichtfunktion der ersten Leuchtelement-Gruppe liegt.

Zur Integration einer weiteren Beleuchtungsart können zusätzlich zur Tagfahrlichtfunktion zumindest die erste Leuchtelement-Gruppe und zweite Leuchtelement-Gruppe eine Fernlichtfunktion aufweisen. Hierbei wird es besonders bevorzugt, wenn die erste Leuchtelement-Gruppe mit einer Leuchtstärke leuchtet, die ungefähr der Leuchtstärke bei einer Aktivierung der Nebellichtfunktion entspricht, insbesondere einer maximalen Leuchtstärke durch die beteiligten Leuchtelemente. Es wird für den Fall, dass die zweite Leuchtelement-Gruppe auch eine Tagfahrlichtfunktion aufweist, bevorzugt, wenn sie während der Aktivierung der Tagfahrlichtfunktion mit geringerer Leuchtstärke leuchtet als bei Aktivierung der Fernlichtlichtfunktion.

Zur Integration noch einer weiteren Beleuchtungsart, insbesondere einer Kurvenlichtfunktion, kann die Fahrzeugbeleuchtungsvorrichtung ferner eine dritte Leuchtelement-Gruppe und / oder eine vierte Leuchtelement-Gruppe mit jeweils mindestens einem Halbleiter-Leuchtelement aufweisen, welche eine Kurvenlichtfunktion für eine jeweils entgegengesetzte Lenkbewegung aufweisen.

Es wird zur Realisierung eines Kurvenlichts oder eines Abbiegelichts bevorzugt, wenn die dritte Leuchtelement-Gruppe und / oder die vierte Leuchtelement-Gruppe eine (dynamische oder statische) Kurvenlichtfunktion für eine jeweils entgegengesetzte Lenkbewegung aufweisen. Beispielsweise kann die dritte Leuchtelement-Gruppe zum Abbiegen nach links aktiviert werden, und die vierte Leuchtelement-Gruppe zum Abbiegen nach rechts. Allgemein können z. B. die Geschwindigkeit, der Lenkwinkel und die Gierrate des Fahrzeugs zur Steuerung eines Abbiege- oder Kurvenlichts verwendet werden. Dies geschieht z. B. in einem Steuergerät der Fahrzeugelektronik, das dann die notwendigen Signale an Leuchtelement-Treiber weitergibt. Beim statischen Kurvenlicht kann zusätzlich der Schalter für den Fahrtrichtungsanzeiger als Eingangsgröße für den Algorithmus verwendet werden. Zusätzlich können die dritte Leuchtelement-Gruppe oder die dritte und die vierte Leuchtelement-Gruppe bei Aktivierung des Fernlichts nicht aktiviert sein, also keine Fernlichtfunktion aufweisen.

Es wird besonders bevorzugt, wenn die dritte Leuchtelement-Gruppe und / oder die vierte Leuchtelement-Gruppe mehrere Halbleiter-Leuchtelemente aufweisen, die jeweils mindestens abhängig von einem zugehörigen Lenkeinschlag usw. aktivierbar sind. Die Leuchtelemente der dritten Leuchtelement-Gruppe und / oder der vierten Leuchtelement-Gruppe können insbesondere sukzessive zuschaltbar sein.

Es kann auch bevorzugt sein, wenn die erste Leuchtelement-Gruppe eine Kurvenlichtfunktion aufweist.

Insbesondere kann es bevorzugt sein, wenn bei zusätzlicher Aktivierung mindestens eines der Leuchtelemente der ersten Leuchtelement-Gruppe ein zugehöriger Ausleuchtungsbereich vergrößert wird, insbesondere seitlich verbreitert wird. Beispielsweise können dazu einige der Leuchtelemente sukzessive zum Rand hin aktivierbar sein, insbesondere in Schritten eines seitlichen Leuchtelementabstands.

Zumindest die erste Leuchtelement-Gruppe und die zweite Leuchtelement-Gruppe weisen kein gemeinsames Halbleiter-Leuchtelement auf.

Es wird außerdem bevorzugt, wenn mindestens ein Halbleiter-Leuchtelement ein weiß (kalt-weiß oder warm-weiß), gelb oder weiß-gelb strahlendes Halbleiter-Leuchtelement umfasst.

Es wird insbesondere bevorzugt, wenn mindestens ein Halbleiter-Leuchtelement mindestens eine Leuchtdiode umfasst, speziell eine weiß leuchtende Leuchtdiode. Die weiß leuchtende Leuchtdiode umfasst insbesondere eine Konversions-LED, bei der ein Teil eines primär blau abgestrahlten Lichts mittels eines Leuchtmittels in gelbes Licht umgewandelt wird, um ein weißes Licht zu ergeben.

Die Leuchtdiode kann beispielsweise als LED-Chip oder als LED-Lampe vorliegen. LED-Lampen sind im Gegensatz zu LED-Chips einzeln gehäust und weisen häufig in ihrem Gehäuse einen Reflektor auf.

Es kann aber auch bevorzugt sein, z. B. zur Variation der Abstrahlfarbe in Abhängigkeit von einer Beleuchtungsart oder einer nationalen Vorschrift, wenn die mindestens eine Leuchtdiode eine Satz verschiedenfarbig leuchtender Leuchtdioden umfasst ("LED-Cluster"), die so ansteuerbar sind, dass ihr Licht ein weißes Mischlicht ergibt.

Es kann dann bevorzugt sein, wenn der Satz verschiedenfarbig leuchtender Leuchtdioden mindestens eine rot leuchtende Leuchtdiode, eine grün leuchtende Leuchtdiode und eine blau leuchtende Leuchtdiode umfasst, insbesondere, falls der Satz verschiedenfarbig leuchtender Leuchtdioden zur Erzeugung eines 'warm-weißen' Farbtons weiter mindestens eine bernsteinfarben ('amber') leuchtende Leuchtdiode umfasst.

Es kann auch bevorzugt sein, wenn dem Satz von Leuchtdioden eine diesen Leuchtdioden gemeinsame Optik, insbesondere Linse, zur Strahlformung und / oder Strahlhomogenisierung, nachgeschaltet ist.

Vorzugsweise sind die Leuchtelemente mindestens einer der Leuchtelement-Gruppen in mindestens einer Reihe angeordnet, z. B. in Matrixform mit einer Reihe aus n Elementen (1xn - Matrix) oder in Matrixform mit m Reihen aus n Elementen (mxn - Matrix). Allerdings kann die Anordnung auch eine andere sein, z. B. nicht matrixförmig, wie, z. B. rund oder oval, mehreckig, insbesondere dreieckig und mehr als rechteckig und so weiter.

Es wird bevorzugt, wenn die Leuchtelemente mindestens zweier der Leuchtelement-Gruppen in jeweils mindestens einer Reihe angeordnet sind und die Reihen dieser Leuchtelement-Gruppen parallel zueinander angeordnet sind, insbesondere in waagerechter Anordnung untereinander (Zeilenform) mit oder ohne Abstand, oder in senkrechter Anordnung nebeneinander (Spaltenform) mit oder ohne Abstand.

Es wird bevorzugt, wenn Halbleiter-Leuchtelemente mindestens der ersten Leuchtelement-Gruppe und der zweiten Leuchtelement-Gruppe auf einem gemeinsamen Substrat, z. B. einer Leiterplatte oder einem Submount, montiert sind. Beispielsweise können ein oder mehrere Substrate mit Leuchtelementen der ersten und zweiten Gruppe bestückt sein; es können aber noch zusätzlich Substrate mit Leuchtelementen nur der ersten Gruppe und / oder nur der zweiten Gruppe vorhanden sein.

Es wird bevorzugt, wenn sämtliche Halbleiter-Leuchtelemente mindestens der ersten Leuchtelement-Gruppe und der zweiten Leuchtelement-Gruppe auf einem gemeinsamen Substrat montiert sind. Es können auch Halbleiter-Leuchtelemente weiterer Gruppen vorhanden sein.

Zwar können die Leuchtelemente auf verschiedene Substrate verteilt sein, jedoch wird es bevorzugt, wenn sämtliche Halbleiter-Leuchtelemente auf einem gemeinsamen Substrat montiert sind.

Das Substrat kann eine Leiterplatte oder ein Submount sein. Vorzugsweise ist das Substrat als Submount ausgebildet, insbesondere als keramisches Submount, z. B. aus AlN. Ein Submount dient vor allem als Träger und Wärmeableiter für die Leuchtelemente. Das Submount ist insbesondere zur Montage von Leuchtdiodenchips bevorzugt. Das Submount besteht vorzugsweise aus gut wärmeleitendem und elektrisch isolierendem Material, z. B. AlN.

In einer besonders bevorzugten Ausgestaltung trägt das Submount ein oder mehrere LED-Chips, vorzugsweise LED-Chips, welche in Oberflächenmontagetechnik auf dem Submount aufgebracht sind; deren Emitterfläche liegt im Wesentlichen parallel zur Oberfläche des Submounts. Für weiß leuchtende oberflächenmontierte LED-Chips wird es bevorzugt, wenn das Wellenlängenkonversionsmaterial ('Leuchtstoff') direkt flächig auf die primäre Emitterfläche aufgetragen ist. Die LED-Chips können gleichartig oder unterschiedlich ausgestaltet sein. Insbesondere können für jede der Leuchtelement (hier: LED)-Gruppen unterschiedlich gestaltete Leuchtdioden verwendet werden. In einer besonders bevorzugten Ausführungsform werden für zumindest zwei der LED-Gruppen LED-Chips mit unterschiedlich großer Emitterfläche verwendet.

Es kann zur Seitenausleuchtung insbesondere bevorzugt sein, wenn ein Ausleuchtbereich der ersten Leuchtelement-Gruppe bezüglich einer seitlichen Erstreckung unsymmetrisch ist.

Es kann zur Erzeugung eines gewünschten Ausleuchtbereichs bevorzugt sein, wenn die Vorrichtung ferner mindestens eine mindestens einem Halbleiter-Leuchtelement nachgeschaltete Optik zur Gestaltung einer Lichtverteilung des von dem mindestens einen Halbleiter-Leuchtelement abgestrahlten Lichts aufweist.

Es wird zur gleichmäßigen Ausleuchtung bevorzugt, wenn die mindestens eine Optik zur Homogenisierung des von dem mindestens einen Halbleiter-Leuchtelement abgestrahlten Lichts ausgestaltet ist.

Es wird dazu speziell bevorzugt, wenn die Homogenisierung eine Farbhomogenisierung des von dem mindestens einen Halbleiter-Leuchtelement abgestrahlten Lichts umfasst, insbesondere bei Verwendung von weißem Mischlicht von verschiedenfarbigen Leuchtelementen.

Es wird dazu auch bevorzugt, wenn die Homogenisierung eine Intensitätshomogenisierung des von dem mindestens einen Halbleiter-Leuchtelement abgestrahlten Lichts umfasst.

Es kann auch bevorzugt sein, wenn die mindestens eine Optik zur bereichsweisen Konzentration des von dem mindestens einen Halbleiter-Leuchtelement abgestrahlten Lichts ausgestaltet ist, z. B. zur Erreichung einer bestimmten Form des Abbildungsbereichs. Innerhalb des Bereichs, in den das Licht konzentriert wird, kann dieses bevorzugt homogen gestaltet werden.

Es wird insbesondere zur Formgebung des Ausleuchtbereichs bevorzugt, wenn die mindestens eine Optik eine abbildende Optik, insbesondere Linse, zur Abbildung bzw. Formung des von dem mindestens einen Halbleiter-Leuchtelement abgestrahlten Lichts auf den zugehörigen Leuchtbereich umfasst.

Es können allgemein zwei oder mehr Optiken mit unterschiedlichen Funktionen nacheinander nachgeschaltet sein, z. B. eine einem Leuchtelement nachgeschaltete erste Optik ('Primäroptik') zur Lichthomogenisierung und Konzentration (Formgebung der Abbildung), der eine zweite, im wesentlichen nur formgebende Optik ('Sekundäroptik') nachgeschaltet ist.

Es kann bevorzugt sein, wenn die mindestens eine Optik einer zugehörigen Leuchtelement-Gruppe nachgeschaltet ist.

Es wird insbesondere bevorzugt, wenn eine Optik allen Leuchtelement-Gruppen nachgeschaltet ist, also eine gemeinsame Optik für alle Leuchtelemente darstellt.

Es kann bevorzugt sein, wenn die Optik einen Reflektor umfasst.

Es kann zusätzlich oder alternativ bevorzugt sein, wenn die Optik einen Lichtleiter umfasst. Dieser kann z. B. aus Glas oder Kunststoff gefertigt sein.

Es wird auch bevorzugt, wenn die Fahrzeugbeleuchtungsvorrichtung ferner eine Ansteuerschaltung, insbesondere Treiber, zum Betreiben mindestens zweier Leuchtelement-Gruppen aufweist, vorzugsweise zum Betreiben aller Leuchtelement-Gruppen. Zwar kann jede Gruppe im Extremfall eine eigene Ansteuerelektronik aufweisen, was aber aufwändig ist.

Es wird insbesondere bevorzugt, wenn die Ansteuerschaltung auf einem Substrat montiert ist und zum gruppenspezifischen Betreiben von auf diesem Substrat ebenfalls montierten Halbleiter-Leuchtelementen vorgesehen ist. Sie kann aber auch getrennt angeordnet sein, z. B. auf einer Leiterplatte, welche auch das Submount bzw. die Submounts trägt.

Es wird auch bevorzugt, wenn bei angeschalteter Fahrzeugbeleuchtungsvorrichtung, d. h., dass mindestens eine Leuchtdiode der Fahrzeugbeleuchtungsvorrichtung eingeschaltet ist, in jeder Beleuchtungsart, z. B. Nebellicht, Tagfahrlicht, Kurvenlicht usw., eine im wesentlichen gleiche Last der Halbleiter-Leuchtelemente vorliegt. Dies kann vorzugsweise dadurch erreicht werden, dass bei zumindest zwei, besonders bevorzugt allen, Beleuchtungsarten eine gleiche Zahl von Leuchtelementen aktiviert ist. In einer nicht erfindungsgemässen Ausführungsform, kann es zur einfachen Ansteuerung der Leuchtelemente bevorzugt sein, wenn mindestens zwei Sätze von Leuchtelementen elektrisch parallel geschaltet sind, die einer unterschiedlichen Beleuchtungsart oder Beleuchtungskonfiguration zugehörig sind, wobei zum Schalten zwischen den Beleuchtungsarten zwischen den Sätzen umgeschaltet wird, z. B. mittels eines Transistors oder einer anderen Logikschaltung. Vorzugsweise weisen alle parallelen Zweige die gleiche Last auf. Insbesondere bevorzugt ist es, wenn in allen parallelen Zweigen die Leuchtelemente jeweils elektrisch in Reihe geschaltet sind. In einer nicht erfindungsgemässen Ausführungsform, kann es auch bevorzugt sein, wenn zumindest zweien der elektrisch parallel geschalteten Sätzen von Leuchtelementen mindestens ein weiterer Satz von Leuchtelementen elektrisch in Reihe geschaltet ist. Diese Leuchtelemente des weiteren Satzes sind bezüglich der zu den mit ihnen in Reihe geschalteten parallelen Zweige zugehörigen Beleuchtungsarten durchgängig aktivierte Leuchtelemente.

Es kann zur flexiblen, insbesondere unabhängigen Ansteuerung auch bevorzugt sein, wenn die Leuchtelement-Gruppen elektrisch in Reihe geschaltet sind und zu jeder Leuchtelement-Gruppe mindestens ein Schalter parallel geschaltet ist.

Dann wird es bevorzugt, wenn zu mindestens einem Schalter mindestens ein Widerstand elektrisch in Reihe geschaltet ist, vorzugsweise zu jedem der Schalter, da so eine im wesentlichen gleiche Last auch bei veränderlicher Zahl der Leuchtelemente aufrechterhalten werden kann.

Die Leuchte ist, gegebenenfalls zusammen mit anderen Lampen, wie beispielsweise zur Erzeugung eines Abblendlichts oder einer Blinkerlampe, zum Einsatz in einen Fahrzeugscheinwerfer ausgestaltet und weist mindestens eine solche Fahrzeugbeleuchtungsvorrichtung auf.

Der Fahrzeugscheinwerfer ist mit mindestens einer solchen Leuchte mindestens einer solchen Fahrzeugbeleuchtungsvorrichtung ausgerüstet.

Das Fahrzeug weist mindestens einen solchen Fahrzeugscheinwerfer auf.

Das Fahrzeug ist vorzugsweise mit mindestens zwei solchen Fahrzeugscheinwerfern ausgerüstet, deren Ausleuchtbereiche der zugehörigen Fahrzeugbeleuchtungsvorrichtung bei aktivierter Nebellichtfunktion seitenverkehrt unsymmetrisch sind.

Dadurch kann insbesondere die erste Fahrzeugbeleuchtungsvorrichtung auf einer linken Seite vorgesehen sein und die zweite Fahrzeugbeleuchtungsvorrichtung auf einer rechten Seite vorgesehen sein und sich ein maximaler Ausleuchtbereich der ersten Fahrzeugbeleuchtungsvorrichtung bezüglich einer Längsrichtung des Fahrzeugs weiter nach links erstrecken und sich ein maximaler Ausleuchtbereich der zweiten Fahrzeugbeleuchtungsvorrichtung bezüglich einer Längsrichtung des Fahrzeugs weiter nach rechts erstrecken.

Vorzugsweise beleuchten bei angeschaltetem Nebellicht die Fahrzeugbeleuchtungsvorrichtungen ihren jeweiligen maximalen Nebellicht-Ausleuchtbereich.

Vorzugsweise leuchten bei angeschaltetem Nebellicht die eine Nebellichtfunktion aufweisenden Leuchtelement-Gruppen mit maximaler Leuchtintensität. In einer nicht erfindungsgemässen Ausführungsform, beleuchtet bei angeschaltetem Abblendlicht und somit ausgeschaltetem Tagfahrlicht oder vorzugsweise beleuchtet bei Nutzung einer Kurvenlichtfunktion" bei Kurvenfahrt zumindest diejenige eine Nebellichtfunktion aufweisenden Leuchtelement-Gruppe, welche einen sich in die Lenkrichtung weiter seitlich erstreckenden Ausleuchtbereich aufweist, einen gegenüber dem Geradeauslauf in Lenkrichtung seitlich verbreiterten Ausleuchtbereich.

Vorzugsweise ist bei Nutzung der Kurvenlichtfunktion bei Kurvenfahrt die Fläche des verbreiterten Ausleuchtbereich unabhängig von einer Stärke eines Lenkeinschlags (statisches Kurvenlicht).

Es kann aber auch bevorzugt sein, wenn bei Nutzung der Kurvenlichtfunktion bei Kurvenfahrt die Fläche des verbreiterten Ausleuchtbereich dergestalt abhängig von einer Stärke eines Lenkeinschlags ist, dass sich bei einem stärkeren Lenkeinschlag der Ausleuchtungsbereich tendenziell vergrößert, insbesondere verbreitert, speziell bis zum Erreichen eines maximalen Ausleuchtungsbereichs (dynamisches Kurvenlicht).

Mittels der oben ausgeführten Lehre ist somit ein Halbleiter-leuchtelement-System, insbesondere LED-System, mit mindestens zwei Beleuchtungsfunktionen bzw. Lichtfunktionen realisierbar. bis zu maximal 4 Lichtfunktionen.

So sind Beleuchtungsfunktionen mit einem System bzw. einer Vorrichtung realisierbar, die mindestens auf Tagfahrlicht, Nebellicht(Nebelscheinwerferlicht), Kurvenlicht, Fernlicht aufbauen, beispielsweise:
- Tagfahrlicht und Nebellicht;
- Tagfahrlicht und Nebellicht und Abbiegelicht (statisches Kurvenlicht);
- Tagfahrlicht und Nebellicht und Fernlicht; usw.

Als Lichtquelle wird vorzugsweise ein LED-Modul (LED-Chip(s) auf einem Submount mit einer zugehörigen Ansteuerschaltung) mit mindestens 2 Chipreihen verwendet, wobei diese Chip-Reihen unabhängig voneinander geschaltet und gedimmt werden können. Vor den Chipreihen befindet sich vorzugsweise eine abbildende Optik (insbesondere Linse) welche die zwei Chip-reihen nach vorne vor das Fahrzeug abbildet. Optional kann Licht, welches nicht direkt auf die Linse fällt, mittels eines Reflektors der Lichtverteilung zugeführt werden. Eine oder mehrere Reihen bilden die Nebellichtverteilung, d. h., eine Lichtverteilung mit einer Hell-Dunkel-Grenze. Für die Tagfahrlichtfunktion werden vorzugsweise eine oder mehrere zusätzliche Chipreihen mit einer bestimmten Leistung hinzugeschaltet, so dass auch über der Hell-Dunkel-Grenze eine Lichtverteilung erzeugt wird. Die Chipreihen, welche für die Nebelscheinwerferfunktion zuständig sind, werden bevorzugt passend gedimmt, so dass insgesamt eine homogene und den Tagfahrlicht-Regelungen angepasste Lichtverteilung erzeugt wird. Die Chipreihen können symmetrisch, unsymmetrisch, gleich groß oder unterschiedlich groß sein und eine gleiche oder unterschiedliche Zahl von Chips beinhalten oder sogar jeweils nur einen Chip aufweisen.

Insbesondere kann die Nebellichtverteilung bzw. -anordnung so ausgelegt werden, dass auch die Anforderung des Abbiegelichts erfüllt wird. Im Fahrzeugbetrieb kann dies bedeuten, dass beim eingeschaltetem Nebellicht beide Anbauseiten am Fahrzeug aufleuchten, während beim ausgeschaltetem Nebellicht und eingeschaltetem Abblendlicht (und somit ausgeschaltetem DRL) nur die dem Lenkeinschlag entsprechende Leuchte aktiviert wird. Wird beispielsweise nach rechts gelenkt, leuchtet nur die rechte Anbauseite am Fahrzeug. Dies kann zusätzlich derart ausgeführt werden, dass abhängig vom Lenkeinschlag verschieden viel LEDs aktiviert werden, um so eine dynamische Ausleuchtung des Kurvenlichts zu erreichen.

Zwischen den Chips und einer Linse (als 'Sekundäroptik') kann eine 'Primäroptik' vorhanden sein, welche (a) das Licht der einzelnen Chips vermischt, um z. B. eine homogenere Farbe oder/und Ausleuchtung zu erhalten und / oder (b) eine Lichtverteilung vordefiniert. Diese Primäroptik kann z. B. aus einem Reflektor und / oder einem Lichtleiter bestehen.

Das LED-Modul wird vorzugsweise mit einer Elektronik derart beschaltet, dass die verschiednen zum Einsatz kommenden Halbleiter-Emitter (insbesondere LEDs) einzeln oder in mehreren Gruppen zusammen betrieben werden können. Im Prinzip kann jede Gruppe bzw. jedes Array mit einem separaten Strom-Regulator versehen werden, was jedoch kosten intensiv und aufwendig ist. In der bevorzugten, kostengünstigen Ausführung werden verschiedene LED-Gruppen so in Reihe und parallel geschaltet, dass immer die gleiche Anzahl von Chips als Last am Ausgang eines zugehörigen Treibers liegen und beispielsweise durch Umlegen eines 'Kipp-Schalters' (in der Praxis bevorzugt durch Schalttransistoren realisiert) die 'Geometrie' des Chip-Arrays bzw. der LED-Gruppe von linear auf quadratisch verändert wird. Andere Geometrieänderungen sind ebenfalls denkbar.

In einem anderen Ausführungsbeispiel kann man z. B. LED-Gruppen in Reihe schalten und zu jeder der Gruppen bzw. Arrays parallel einen Schalttransistor legen, der das Array kurzschließen kann, so dass es nicht aktiv ist. Dabei kann in dem Parallelzweig optional ein Widerstand zur Stromreduktion geschaltet sein. In dieser Ausführung kann man die Adressierung einzelner LEDs oder LED-Gruppen mit einem einzigen Treiberbaustein realisieren, dann allerdings meist mit variabler Last arbeitet.

Ein Vorteil der vorliegenden Erfindung ist es, dass aus einem einzigen System (mehrere Chip-Reihen + Optik) mindestens zwei verschiedene Lichtfunktionen generiert werden, insbesondere mindestens Tagfahrlicht und Nebellicht. Dadurch ergibt sich ein geringerer Platzbedarf, weniger Stecker und Kabel, d. h., geringere Kosten. Wird das Nebellicht so ausgelegt, dass auch die Anforderungen des Abbiegelichts erfüllt sind, kann das System beispielsweise für drei Lichtfunktionen genutzt werden, nämlich insbesondere für Tagfahrlicht, Nebellicht und Abbiegelicht.

Befindet sich das System im Nebellicht- oder Abbiegelicht-Modus, können die genutzten Chips maximal bestromt werden, ohne das System zu überhitzen. Wird die für die Tagfahrlicht notwendige zusätzliche Chipreihe(n) aktiviert, könnte das Kühlkonzept möglicherweise überlasten (System bzw. Chip wird zu heiß). Aufgrund des Dimmens der Nebellichtfunktion kann aber das Wärmeaufkommen reduziert werden, so dass das System im Betriebsmodus 'Tagfahrlicht' so ausgelegt werden kann, dass es insgesamt innerhalb der Grenzen des Kühlkonzepts liegt (Chips werden nicht zu heiß).

In den folgenden Figuren wird die Erfindung anhand von Ausführungsbeispielen schematisch genauer beschrieben. Dabei können zur besseren Übersichtlichkeit gleiche oder gleichwirkende Elemente mit gleichen Bezugszeichen versehen sein.
- FIG 1A: zeigt eine Aufsicht auf ein LED-Modul einer Fahrzeugbeleuchtungsvorrichtung;
- FIG 1B: zeigt in Schrägansicht LED-Gruppen des LED-Moduls aus FIG 1 mit einer nachgeschalteten Linse der Fahrzeugbeleuchtungsvorrichtung;
- FIG 2A: zeigt in Schrägansicht eine Skizze eines Ausleuchtbereichs einer ersten LED-Gruppe unter Verwendung der Fahrzeugbeleuchtungsvorrichtung aus FIG 2;
- FIG 2B: zeigt in Schrägansicht eine Skizze eines Ausleuchtbereichs einer zweiten LED-Gruppe unter Verwendung der Fahrzeugbeleuchtungsvorrichtung aus FIG 2;
- FIG 2C: zeigt in Schrägansicht eine Skizze eines kombinierten Ausleuchtbereichs der ersten und der zweiten LED-Gruppe unter Verwendung der Fahrzeugbeleuchtungsvorrichtung aus FIG 2;
- FIG 3: zeigt in Schrägansicht eine Skizze eines Ausleuchtbereichs einer ersten LED-Gruppe gemäß einer weiteren Ausführungsform ähnlich zur Ansicht aus FIG 2A;
- FIG 4: zeigt in Schrägansicht Elemente einer weiteren Ausführungsform einer Fahrzeugbeleuchtungsvorrichtung;
- FIG 5: zeigt in Seitenansicht die Fahrzeugbeleuchtungsvorrichtung aus FIG 1 mit einem Reflektor und einer Linse;
- FIG 6A: zeigt ein nicht erfindungsgemäss Schaltbild von LED-Gruppen einer Fahrzeugbeleuchtungsvorrichtung
- FIG 6B: zeigt in Aufsicht eine räumliche Anordnung der LED-Gruppen aus FIG 6A;
- FIG 7: zeigt ein weiteres mögliches prinzipielles Schaltbild von LED-Gruppen einer Fahrzeugbeleuchtungsvorrichtung

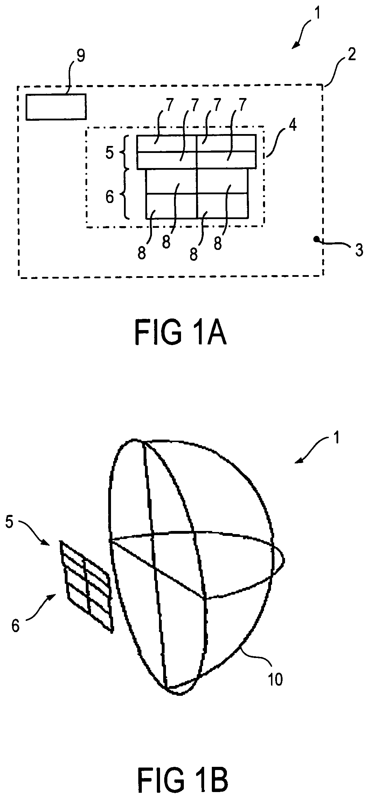

FIG 1A zeigt als Teil einer Fahrzeugbeleuchtungsvorrichtung 1 ein LED-Modul 2. Das LED-Modul 2 weist eine Leiterplatte 3 auf, an welcher ein AlN-Submount 4 angebracht ist. Auf dem AlN-Submount 4 sind eine erste LED-Gruppe 5 mit vier in Form einer 2x2-Matrix angeordneten weißen, oberflächenmontierten LED-Chips 7 und eine darunter direkt angrenzende zweite LED-Gruppe 6 mit ebenfalls vier in Form einer 2x2-Matrix angeordneten weißen, oberflächenmontierten LED-Chips 8 angeordnet. Die LED-Chips 7 bzw. 8 sind also in zwei Reihen mit jeweils zwei Elementen angeordnet. Die Oberflächen der LED-Chips 7 bzw. 8 entsprechen in etwa den Emitterflächen und sind nicht einzeln gehäust. Die Emitteroberfläche der LED-Chips 7 unterscheidet sich von der Emitteroberfläche der LED-Chips 8 dahingehend, dass sie breiter und flacher ausgestaltet ist. Die Chipreihen können allgemein symmetrisch oder unsymmetrisch gestaltet sein, als auch gleich groß oder unterschiedlich groß sein und eine gleiche oder unterschiedliche Zahl von Chips beinhalten oder sogar jeweils nur einen Chip aufweisen. Die Leuchtdioden 7, 8 der unterschiedlichen Gruppen 5, 6 können ebenfalls unterschiedlich ausgestaltet sein, z. B. bezüglich einer Anzahl der Leuchtdioden, Leuchtstärke der Leuchtdioden, Größe der Emitterfläche und Anordnung der Leuchtdioden.

Auf der Leiterplatte 3 ist ferner eine Ansteuerelektronik 9 in Form eines elektronischen Treiberbausteins vorhanden, welcher einer Ansteuerung der LED-Gruppen 5, 6 bzw. der denen zugehörigen LEDs 7, 8 dient. Mittels der Ansteuerelektronik 9 sind die beiden LED-Gruppen 5, 6 unabhängig voneinander ansteuerbar, z. B. einzeln oder gemeinsam aktivierbar. Beim Aktivieren einer LED-Gruppe 5, 6 werden die dieser Gruppe 5, 6 zugehörigen LEDs 7 bzw. 8 im vorliegenden Ausführungsbeispiel gleichartig angesteuert bzw. betrieben. Dabei wird mittels der Ansteuerelektronik bzw. mittels des Treibers 9 vor allem eine Leuchtstärke der LED-Gruppen 5 bzw. 6 durch Einstellen eines durch die LED-Chips 7 bzw. 8 geleiteten Betriebsstroms eingestellt. Nicht weiter eingezeichnet sind weitere zum Betrieb der Fahrzeugbeleuchtungsvorrichtung 1 vorgesehene Element, wie Kabel, Leiterbahnen usw.

Im gezeigten Ausführungsbeispiel dient die erste Gruppe 5 sowohl zur Bereitstellung einer Nebellichtfunktion bzw. als Nebelscheinwerfer-Lichtquelle und zur Bereitstellung einer Tagfahrlichtfunktion bzw. als Lichtquelle für ein Tagfahrlicht. Die untere, zweite LED-Gruppe 6 weist eine Tagfahrlichtfunktion auf, d. h., dass sie zur Erzeugung eines Tagfahrlichts dient.

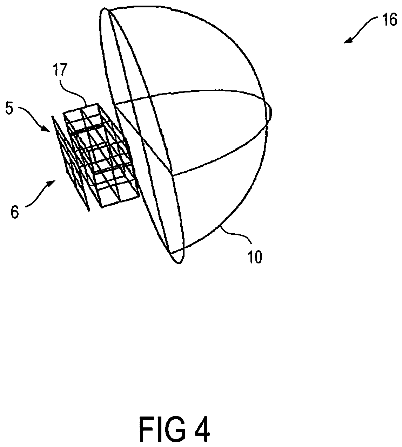

FIG 1B zeigt die LED-Gruppen 5, 6 der Fahrzeugbeleuchtungsvorrichtung 1 zusätzlich mit einer diesen nachgeschalteten gemeinsamen Linse 10, die als Sekundäroptik dient, wie weiter unten genauer in Bezug auf FIG 4 beschrieben wird. Mittels der Linse 10 wird das von den LED-Gruppen 5, 6 bzw. den darin enthaltenen Leuchtdioden 7, 8 erzeugte Licht zur Erzeugung eines zugehörigen Be- bzw. Ausleuchtungsbereichs vor dem Fahrzeug abgebildet. Insbesondere wird dadurch eine maximale Kontur des beleuchteten Bereichs festgelegt. Nicht gezeigt, aber optional vorhanden können weitere Abbildungsformen der Elemente sein, wie beispielsweise eine Primäroptik, eine Blende usw.

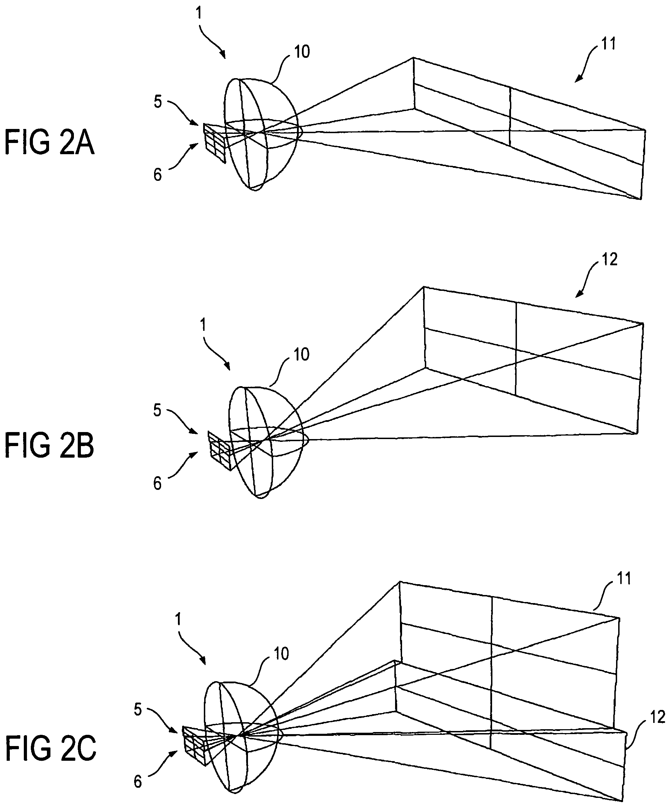

FIG 2A zeigt einen ausgeleuchteten Bereich 11 bei Aktivierung nur der ersten Gruppe 5 von Leuchtdioden für eine Nebellichtfunktion. FIG 2B zeigt eine analoge Darstellung, bei der jedoch die zweite Gruppe 6 bzw. deren Leuchtdioden aktiviert ist. FIG 2C zeigt den beleuchteten Bereich bei gemeinsamer Aktivierung beider Gruppen 5,6.

Bei angeschaltetem Nebel(scheinwerfer)licht durch die erste Gruppe 5 gemäß FIG 2A sind die Anforderungen an ein Nebellicht bereits erfüllt. Die erste Gruppe 5 leuchtet dazu mit maximaler Leuchtstärke, indem sämtliche vier LED-Chips maximal bestromt werden.

Hingegen wird bei alleiniger Aktivierung der zweiten Gruppe 6 gemäß FIG 2B noch keine Anforderung an eine Beleuchtungsart, z. B. ein Tagfahrlicht oder ein Fernlicht, erfüllt.

Erst wenn, wie in FIG 2C gezeigt, die erste Gruppe 5 und die zweite Gruppe 6 gemeinsam aktiviert sind, werden die Anforderungen an eine weitere Beleuchtungsart, z. B. ein Tagfahrlicht oder ein Fernlicht, erfüllt.

Zur Erfüllung einer Tagfahrlichtfunktion ist die Leuchtstärke der ersten Gruppe 5 im Vergleich zur Aktivierung der Nebellichtfunktion weit schwächer eingestellt ("gedimmt"), um ein Blenden des Gegenverkehrs auszuschließen bzw. den Anforderungen der entsprechenden Regelung zu entsprechen. Das Dimmen der ersten Gruppe 5 kann durch ein Dimmen aller LEDs dieser Gruppe geschehen. Gleichzeitig ist die Lichtstärke der zweiten LED-Gruppe 6 ebenfalls so schwach, dass ein Blenden bei gleichzeitig guter Sichtbarkeit ausgeschlossen ist. Vorzugsweise ist die erste Gruppe 5 so weit heruntergedimmt, dass sich über den gemeinsam beleuchteten Bereich 11,12 keine sprunghafte Intensitätsänderung an der Grenze des durch die erste LED-Gruppe 5 erzeugten Beleuchtungsbereichs 11 ergibt. Zur Beibehaltung einer möglichst homogenen Lichtstärkeverteilung im Beleuchtungsbereich 11, welcher durch die erste LED-Gruppe 5 erzeugt wird, wird es bevorzugt, wenn alles LEDs der ersten Gruppe 5 aktiviert, aber gedimmt sind.

Zur Erfüllung einer Fernlichtfunktion ist die Leuchtstärke der ersten Gruppe 5 im Vergleich zur Aktivierung der Nebellichtfunktion unverändert. Gleichzeitig sind auch die LEDs der zweiten LED-Gruppe 6 maximal bestromt.

Mittels der gezeigten Fahrzeugbeleuchtungsvorrichtung können somit mindestens die drei beschriebenen Lichtfunktionen, nämlich Tagfahrlicht, Nebellicht und Fernlicht, bei sehr geringem Platzbedarf und aufgrund eines geringeren Verdrahtungsaufwands geringeren Kosten bereitgestellt werden.

Die Form der Ausleuchtbereiche 11,12 entspricht, höhenvertauscht, im Wesentlichen der Form der Emitterflächen der LED-Gruppen 5,6. Alternativ kann die abbildende Optik die Form und Intensitätsverteilung usw. der Emitterflächen ändern. Beispielsweise kann symmetrische Emitterfläche zu einer Seite verbreitert abgebildet werden, um eine Seitenbeleuchtung zu verbessern und / oder ein Kurvenlicht bei einfacher Lichtemitterform zu ermöglichen. Auch können beispielsweise bestimmte Flächenanteile des Ausleuchtbereichs mit höherer Intensität beleuchtet werden als andere.

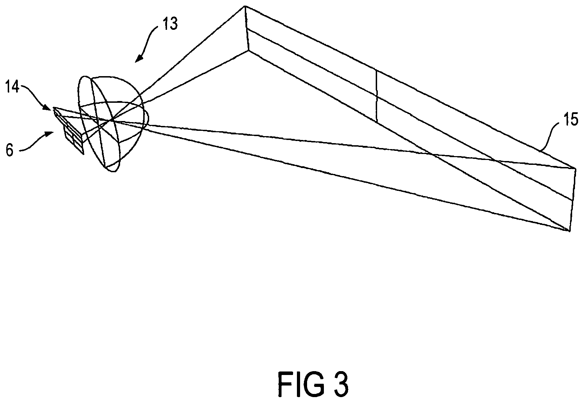

FIG 3 zeigt ein weiteres Ausführungsbeispiel einer Fahrzeugbeleuchtungsvorrichtung 13, bei der nun im Gegensatz zur Fahrzeugbeleuchtungsvorrichtung 1 aus FIG 2 die Emitterfläche der ersten Gruppe 14 von vier in 2x2-Matrixform angeordneten Leuchtdioden nicht mehr bezüglich der zweiten Gruppe 6 symmetrisch angeordnet ist, sondern sich zu einer Seite hin weiter erstreckt als zu einer anderen Seite hin. In der gezeigten Abbildung wird dadurch ein nach rechts erweiterter Beleuchtungsbereich 15 erzeugt. Eine solche Fahrzeugbeleuchtungsvorrichtung 13 kann insbesondere dazu benutzt werden, speziell bei Einbau auf einer rechten Seite eines Fahrzeugs, einen rechten Rand stärker auszuleuchten. Dies kann insbesondere dazu verwendet werden, die Fahrzeugbeleuchtungsvorrichtung 13 zusätzlich mit einer Abbiegelichtfunktion zu nutzen.

Zur Erzeugung eines Nebellichts (Nebellichtfunktion) würden weiterhin die vier Leuchtdioden-Chips der ersten LED-Gruppe 14 maximal bestromt werden. Zur Erzeugung eines Tagfahrlichts würde die zweite LED-Gruppe 6 mit vergleichsweise geringer Lichtstärke strahlen; bei der ersten LED-Gruppe 14 könnten dann alle LEDs oder nur die beiden rechten LEDs voll oder gedimmt aktiviert sein. Zur Erzeugung eines Kurvenlichts können beispielsweise im Geradeauslauf keine oder nur die beiden rechten LEDs aktiviert sein, welche einen Teilbereich weiter zur Fahrbahn hin ausleuchten, während zur Kurvenfahrt alle oder nur die beiden linken LEDs der ersten Gruppe 14 hinzugeschaltet werden, welche einen Teilbereich weiter zum Rand hin ausleuchten. Die Leuchtstärke des Kurvenlichts ist entweder festgelegt oder variabel einstellbar.

In einem Fahrzeug würde sinnvollerweise auf der linken Seite, z. B. im Zusammenhang mit einem linken Fahrzeugscheinwerfer, eine entsprechend seitenverkehrte Fahrzeugbeleuchtungsvorrichtung eingebaut sein, welche den linken Rand stärker ausleuchtet.

FIG 4 zeigt eine weitere Ausführungsform einer Fahrzeugbeleuchtungsvorrichtung 16, bei der nun zwischen den LED-Gruppen 5, 6 und der Linse 10 eine weitere Optik ("Primäroptik") 17 angeordnet ist. Die Primäroptik 17 dient hier insbesondere einer Intensitäts- und / oder Farbhomogenisierung des von den LED-Gruppen 5,6 abgestrahlten Lichts, als auch einer ersten Formung des Abbildungsbereichs bzw. Ausleuchtungsbereichs. Dazu ist die Primäroptik 17 hier als pyramidenstumpfförmiger Glaskörper mit rechteckiger Grund- und Deckfläche ausgestaltet. Alternativ sind z. B. ein CPC-Körper eine konvexe oder konkave Linse, eine Fresnel-Linse einsetzbar. Auch kann die Primäroptik opak, ganz oder teilweise farbfilternd oder transparent ausgestaltet sein, oder bereichsweise lichtundurchlässig gestaltet sein, die Grund- und Deckfläche kann bezüglich der Emitterflächen (Chip- bzw. Gruppen-Anordnung) und der Lichtfunktion optimiert werden und von einer rechteckigen Geometrie abweichen.

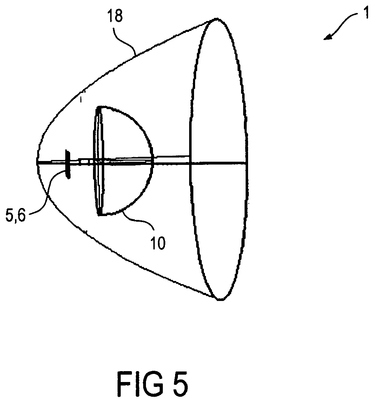

FIG 5 zeigt die Fahrzeugbeleuchtungsvorrichtung 1 mit einem parabelförmigen Reflektor 18, welcher dazu dient, von den LED-Gruppen 5, 6 seitlich abgestrahltes Licht, welches nicht auf die Linse 10 fällt, so zu reflektieren, dass zur Beleuchtung verwendet werden kann. Dazu kann das Licht entweder an der Linse 10 vorbei oder auf die Linse 10 reflektiert werden. Dadurch wird eine Lichtausbeute verbessert. Der Reflektor kann alternativ beispielsweise in Form eines Freiformreflektors vorliegen. Es kann bzw. können auch eine oder mehrere - nicht gezeigte - Primäroptik(en) vorhanden sein.

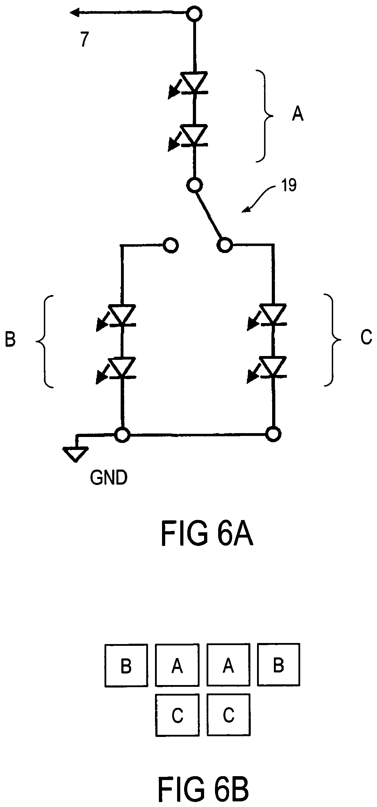

FIG 6A zeigt eine nicht erfindungsgemässe Verschaltung dreier Sätze A, B und C von Leuchtdioden, deren geometrische Anordnung in FIG 6B gezeigt ist. Beispielsweise können die Sätze A und B einer ersten LED-Gruppe entsprechen und der Satz C einer zweiten LED-Gruppe in Anlehnung zu FIG 1.

Während die Sätze B und C elektrisch parallel geschaltet sind, sind beide bezüglich Satz A in Reihe geschaltet. Die Sätze A, B und C sind zwischen einen Ausgang eines Treibers 7 und einen Masseanschluss GND geschaltet. Zwischen Satz A einerseits und die parallel geschalteten Sätze B und C andererseits ist ein Kippschalter in Form eines elektronischen Schalters, insbesondere Transistors 19, eingefügt, so dass ein Strompfad zwischen den beiden parallelen Zweigen bezüglich der LED-Sätze B und C umgeschaltet werden kann. In anderen Worten kann ein Stromfluss umgeschaltet werden zwischen einem Stromfluss durch den LED-Satz A und den LED-Satz B einerseits und den LED-Satz A und den LED-Satz C andererseits. Die Last jeder der Gruppen ist im Wesentlichen gleich, so dass beim Umschalten zwischen den beiden LED-Sätzen B und C die Last über den gesamten Strom-Pfad im Wesentlichen konstant bleibt. Dadurch kann eine Ansteuerschaltung mit konstanter Laststeuerung verwendet werden, was eine weitere Kostenverringerung ergibt. Dies kann beispielsweise dadurch erreicht werden, dass im Wesentlichen gleichartige LEDs in gleicher Zahl bezüglich der LED-Gruppen B und C verwendet werden. Alternativ kann selbstverständlich jeder Satz A,B,C mit einem separaten Treiber versehen werden, was jedoch kostenintensiv und aufwändig ist.

Mit dieser Schaltung kann beispielsweise mit besonders wenig Aufwand unter Verwendung einer Konstantstromquelle, insbesondere einer einfachen Spannungsquelle, zwischen einem Nebellicht und einem Fernlicht umgeschaltet werden. Das Nebellicht wird durch die Sätze A und B erzeugt, während das Fernlicht durch die Sätze A ('halbierter' Nebellicht-Ausleuchtbereich) und C erzeugt wird. Dabei wird vorausgesetzt, dass die LEDs eine gleiche Aufnahmeleistung aufweisen.

Befindet sich das System im Nebellicht-Modus, ist das LED-System so ausgelegt, dass die vier genutzten Chips maximal bestromt werden können, ohne das System zu überhitzen. Wird der für das Fernlicht notwendige Satz C aktiviert, könnte das Kühlkonzept möglicherweise überlasten (System bzw. Chip wird zu heiß). Aufgrund des Abschaltens des Satzes B kann aber das Wärmeaufkommen konstant gehalten werden, so dass die LEDs nicht zu heiß werden. Bei Verwendung einer Stromquelle mit variabler Leistung kann hier auch ein Dimmen durchgeführt werden, bei dem alle LEDs eines Schaltzustands gleich bestromt werden.

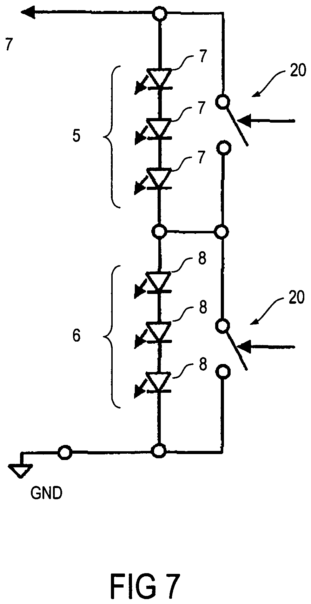

FIG 7 zeigt eine mögliche unabhängige Schaltung zweier LED-Sätze anhand der LED-Gruppen 5,6 aus FIG 2, welche sich auf beliebig viele LED-Gruppen auf einfache Weise erweitern lässt. In der gezeigten Ausführung sind alle LED-Gruppen 5,6 zwischen einen Ausgang eines Treibers 7 und Masse GND in Reihe geschaltet, wobei zu jeder LED-Gruppe 5,6 ein einfacher Schalter 20 parallel geschaltet ist. Bei geöffnetem Schalter 20 fließt Strom in dem zu der LED-Gruppe 5,6 zugehörigen Abschnitt durch die entsprechenden Leuchtdioden 7 bzw. 8, während bei geschlossenem Schalter 20 der Strom über den Schalter 20 geleitet wird ("kurzgeschlossen wird"). Eine solche Schaltung kann beispielsweise mittels eines Treibers 7 mit variabler Last realisiert werden. Zur Stromsparung ist in jedem mit einem Schalter 20 versehenen Zweig ein Widerstand vorhanden. Vorzugsweise entspricht der Widerstandswert eines solchen Widerstands im Wesentlichen dem Lastwiderstand der zugehörigen LED-Gruppe 5,6, so dass auch bei einem geschlossenen Schalter 20 bzw. mehreren geschlossenen Schaltern 20 eine im wesentlichen konstante Last vorliegt; in diesem Fall kann auch ein Treiberbaustein mit konstanter Last verwendet werden, was besonders preiswert ist.

Selbstverständlich ist die vorliegende Erfindung nicht auf die beschriebenen Ausführungsbeispiele beschränkt, so ist die Zahl und Anordnung der Leuchtdioden auch anders realisierbar. Beispielsweise mag eine LED-Gruppe nur eine einzige Leuchtdiode aufweisen oder mehrere Leuchtdioden beliebiger Zahl, d. h., 2 oder mehr Leuchtdioden. Auch muss die Anordnung der Leuchtdioden nicht rechteckig, d. h., in Matrixform, vorliegen. Ferner kann statt eines weißen Tagfahrlichts beispielsweise auch ein gelbes Tagfahrlicht erzeugt werden. Als Leuchtdiode kann beispielsweise eine weiße Leuchtdiode bzw. weiße Leuchtdioden verwendet werden, oder es kann ein Cluster aus verschiedenfarbigen Leuchtdioden verwendet werden, die zusammen, gegebenenfalls mittels einer dazu ausgestalteten Optik, ein weißes Mischlicht ergeben. Die Verwendung eines LED-Clusters weist den Vorteil auf, dass die Leuchtfarbe variabel einstellbar ist.

Die gezeigte Fahrzeugbeleuchtungsvorrichtung kann mit LED-Modul, Optik(en), ggf. einem Gehäuse und / oder einem aktiven oder passiven Kühlelement (z. B. einem mit Kühlrippen ausgestalteten Kühlkörper), Verdrahtung, elektrischen Anschlüssen und so weiter auch als LED-System bezeichnet werden. Die Fahrzeugbeleuchtungsvorrichtung bzw. das LED-System können Teil einer Lampe sein oder eine Lampe darstellen. Die Fahrzeugbeleuchtungsvorrichtung oder die Lampe kann in einen Fahrzeugscheinwerfer verbaut werden, welcher wiederum in ein Fahrzeug verbaut werden kann.

Auch kann die Primäroptik beispielsweise auch als Körper aus einem anderen transparenten Material hergestellt sein.

### Bezugszeichenliste

- 1: Fahrzeugbeleuchtungsvorrichtung
- 2: LED-Modul
- 3: Leiterplatte
- 4: Submount
- 5: erste LED-Gruppe
- 6: zweite LED-Gruppe
- 7: LED-Chip
- 8: LED-Chip
- 9: Ansteuerelektronik
- 10: Linse
- 11: Ausleuchtungsbereich
- 12: Ausleuchtungsbereich
- 13: Fahrzeugbeleuchtungsvorrichtung
- 14: ersten Gruppe
- 15: Ausleuchtungsbereich
- 16: Fahrzeugbeleuchtungsvorrichtung
- 17: Primäroptik
- 18: Reflektor
- 19: Transistor
- 20: Schalter
- A: Satz von Leuchtdiode(n)
- B: Satz von Leuchtdiode(n)
- C: Satz von Leuchtdiode(n)
- GND: Masseanschluss

## Patentansprüche

1. Fahrzeugbeleuchtungsvorrichtung (1; 13; 16) mit mindestens zwei Halbleiter-Leuchtelementen (7; 8), wobei die Fahrzeugbeleuchtungsvorrichtung (1; 13; 16) mindestens eine erste Leuchtelement-Gruppe (5; 14) und eine zweite Leuchtelement-Gruppe (6) mit jeweils mindestens einem Halbleiter-Leuchtelement (7; 8) aufweist, wobei
- alle Halbleiter-Leuchtelemente (7; 8) der ersten Leuchtelement-Gruppe (5; 14) und alle Halbleiter-Leuchtelemente (7; 8) der zweiten Leuchtelement-Gruppe (6) jeweils über genau einen Schalter (20) ansteuerbar sind,
- die Leuchtelement-Gruppen (5; 14) unabhängig voneinander ansteuerbar sind,
- die erste Leuchtelement-Gruppe (5; 14) eine Nebellichtfunktion bildet und
- die erste Leuchtelement-Gruppe (5; 14) und die zweite Leuchtelement-Gruppe (6) bei gemeinsamer Ansteuerung eine Tagfahrlichtfunktion bilden.

2. Fahrzeugbeleuchtungsvorrichtung (1; 13; 16) nach Anspruch 1, bei der das mindestens eine Halbleiter-Leuchtelement (7; 8) der ersten Leuchtelement-Gruppe (5; 14) und der zweiten Leuchtelement-Gruppe (6) jeweils elektrisch in Reihe geschaltet sind.

3. Fahrzeugbeleuchtungsvorrichtung (1; 13; 16) nach einem der vorhergehenden Ansprüche, bei der die erste Leuchtelement-Gruppe (5;14) während der Aktivierung der Tagfahrlichtfunktion mit geringerer Leuchtstärke leuchtet als bei einer Aktivierung der Nebellichtfunktion.

4. Fahrzeugbeleuchtungsvorrichtung (1; 13; 16) nach Anspruch 3, bei der die zweite Leuchtelement-Gruppe (6) in der Tagfahrlichtfunktion mindestens einen Bereich (12) ausleuchtet, der in einem Dunkelbereich der Nebellichtfunktion der ersten Leuchtelement-Gruppe (5; 14) liegt.

5. Fahrzeugbeleuchtungsvorrichtung (1; 13; 16) nach einem der vorhergehenden Ansprüche, welche außer der Nebellichtfunktion und der Tagfahrlichtfunktion zusätzlich maximal eine Fernlichtfunktion und / oder eine Kurvenlichtfunktion aufweist.

6. Fahrzeugbeleuchtungsvorrichtung (1; 13; 16) nach einem der vorhergehenden Ansprüche, bei der die erste Leuchtelement-Gruppe (5; 14) und die zweite Leuchtelement-Gruppe (6) eine Fernlichtfunktion aufweisen.

7. Fahrzeugbeleuchtungsvorrichtung (1; 13; 16) nach einem der vorhergehenden Ansprüche, ferner aufweisend eine dritte Leuchtelement-Gruppe und eine vierte Leuchtelement-Gruppe mit jeweils mindestens einem Halbleiter-Leuchtelement, welche eine Kurvenlichtfunktion für eine jeweils entgegengesetzte Lenkbewegung aufweisen.

8. Fahrzeugbeleuchtungsvorrichtung (1; 13; 16) nach einem der vorhergehenden Ansprüche, bei der mindestens ein Halbleiter-Leuchtelement mindestens einen Leuchtdioden-Chip (7; 8) umfasst und bei der für mindestens zwei der Leuchtelement-Gruppen (5; 6; 14)unterschiedlich gestaltete Halbleiter-Leuchtelemente verwendet werden.

9. Fahrzeugbeleuchtungsvorrichtung (1; 13; 16) nach Anspruch 8, bei der für mindestens zwei der Leuchtelement-Gruppen (5; 6; 14) Leuchtdioden-Chips (7; 8) mit einer unterschiedlich großen Emitterfläche verwendet werden.

10. Fahrzeugbeleuchtungsvorrichtung (1; 13; 16) nach einem der vorhergehenden Ansprüche, bei der die Leuchtelemente (7; 8) mindestens zweier der Leuchtelement-Gruppen (5; 6) in jeweils mindestens einer Reihe angeordnet sind und die Reihen dieser Leuchtelement-Gruppen (5; 6) parallel zueinander in waagerechter Anordnung untereinander angeordnet sind.

11. Fahrzeugbeleuchtungsvorrichtung (1;13;16) nach einem der vorhergehenden Ansprüche, bei der ein Ausleuchtbereich (15) der ersten Leuchtelement-Gruppe (14) bezüglich einer seitlichen Erstreckung unsymmetrisch ist.

12. Fahrzeugbeleuchtungsvorrichtung (1; 13; 16) nach einem der vorhergehenden Ansprüche, bei der bei angeschalteter Fahrzeugbeleuchtungsvorrichtung (1; 13; 16) bei zumindest zwei, insbesondere allen, Beleuchtungsarten eine im Wesentlichen gleiche elektrische Last der Halbleiter-Leuchtelemente (7; 8) vorliegt.

13. Fahrzeugscheinwerfer mit mindestens einer Fahrzeugbeleuchtungsvorrichtung (1; 13; 16) nach einem der vorhergehenden Ansprüche.

14. Fahrzeug mit mindestens einem Fahrzeugscheinwerfer nach Anspruch 13.

## Claims

1. Vehicle lighting device (1; 13; 16) with at least two semiconductor light-emitting elements (7; 8), the vehicle lighting device (1; 13; 16) comprising at least a first light-emitting element group (5; 14) and a second light-emitting element group (6), each having at least one semiconductor light-emitting element (7; 8), wherein
- all the semiconductor light-emitting elements (7; 8) of the first light-emitting element group (5; 14) and all the semiconductor light-emitting elements (7; 8) of the second light-emitting element group (6) are drivable in each case via exactly one switch (20),
- the light-emitting element groups (5; 14) are drivable independently of one another,
- the first light-emitting element group (5; 14) forms a foglight function, and
- the first light-emitting element group (5; 14) and the second light-emitting element group (6) when driven together form a daytime running light function.

2. Vehicle lighting device (1; 13; 16) according to Claim 1, in which the at least one semiconductor light-emitting element (7; 8) of the first light-emitting element group (5; 14) and of the second light-emitting element group (6) are in each case electrically connected in series.

3. Vehicle lighting device (1; 13; 16) according to any of the preceding claims, in which the first light-emitting element group (5; 14) illuminates at a lower luminous intensity during activation of the daytime running light function than during activation of the foglight function.

4. Vehicle lighting device (1; 13; 16) according to Claim 3, in which the second light-emitting element group (6) in the daytime running light function illuminates at least a region (12) which is in a region of darkness of the foglight function of the first light-emitting element group (5; 14).

5. Vehicle lighting device (1; 13; 16) according to any of the preceding claims, which, besides the foglight function and the daytime running light function, additionally has maximally one upper beam function and/or one cornering light function.

6. Vehicle lighting device (1; 13; 16) according to any of the preceding claims, in which the first light-emitting element group (5; 14) and the second light-emitting element group (6) have an upper beam function.

7. Vehicle lighting device (1; 13; 16) according to any of the preceding claims, further having a third light-emitting element group and a fourth light-emitting element group, each having at least one semiconductor light-emitting element, which have a cornering light function for a respectively opposite steering movement.

8. Vehicle lighting device (1; 13; 16) according to any of the preceding claims, in which at least one semiconductor light-emitting element comprises at least one light-emitting diode chip (7; 8), and in which differently configured semiconductor light-emitting elements are used for at least two of the light-emitting element groups (5; 6; 14).

9. Vehicle lighting device (1; 13; 16) according to Claim 8, in which light-emitting diode chips (7; 8) having an emitter area of differing sizes are used for at least two of the light-emitting element groups (5; 6; 14).

10. Vehicle lighting device (1; 13; 16) according to any of the preceding claims, in which the light-emitting elements (7; 8) in at least two of the light-emitting element groups (5; 6) are arranged in in each case at least one row and the rows of these light-emitting element groups (5; 6) are arranged in parallel with one another in a horizontal arrangement one below the other.

11. Vehicle lighting device (1; 13; 16) according to any of the preceding claims, in which an illumination region (15) of the first light-emitting element group (14) is asymmetrical with respect to a lateral extent.

12. Vehicle lighting device (1; 13; 16) according to any of the preceding claims, in which, when the vehicle lighting device (1; 13; 16) is switched on, there is a substantially identical electrical load of the semiconductor light-emitting elements (7; 8) in the case of at least two, in particular all, types of illumination.

13. Vehicle headlamp with at least one vehicle lighting device (1; 13; 16) according to one of the preceding claims.

14. Vehicle with at least one vehicle headlamp according to Claim 13.

## Revendications

1. Dispositif d'éclairage de véhicule (1 ; 13 ; 16) comportant au moins deux éléments d'éclairage à semi-conducteurs (7 ; 8), dans lequel le dispositif d'éclairage de véhicule (1 ; 13 ; 16) comporte au moins un premier groupe d'éléments d'éclairage (5 ; 14) et un deuxième groupe d'éléments d'éclairage (6) ayant respectivement au moins un élément d'éclairage à semi-conducteurs (7 ; 8), dans lequel
- tous les éléments d'éclairage à semi-conducteurs (7 ; 8) du premier groupe d'éléments d'éclairage (5 ; 14) et tous les éléments d'éclairage à semi-conducteurs (7 ; 8) du deuxième groupe d'éléments d'éclairage (6) peuvent être commandés par l'intermédiaire d'exactement un commutateur (20),
- les groupes d'éléments d'éclairage (5 ; 14) peuvent être commandés indépendamment les uns des autres,
- le premier groupe d'éléments d'éclairage (5 ; 14) présente une fonction de feu antibrouillard et
- le premier groupe d'éléments d'éclairage (5 ; 14) et le deuxième groupe d'éléments d'éclairage (6) présentent une fonction de feu de plein jour lorsqu'ils sont commandés en commun.

2. Dispositif d'éclairage de véhicule (1 ; 13 ; 16) selon la revendication 1, dans lequel l'au moins un élément d'éclairage à semi-conducteurs (7 ; 8) du premier groupe d'éléments d'éclairage (5 ; 14) et du deuxième groupe d'éléments d'éclairage (6) sont respectivement connectés électriquement en série.

3. Dispositif d'éclairage de véhicule (1 ; 13 ; 16) selon l'une quelconque des revendications précédentes, dans lequel le premier groupe d'éléments d'éclairage (5 ; 14) éclaire avec une intensité lumineuse plus faible lors de l'activation de la fonction de feu de plein jour que lors d'une activation de la fonction de feu antibrouillard.

4. Dispositif d'éclairage de véhicule (1 ; 13 ; 16) selon la revendication 3, dans lequel le deuxième groupe d'éléments d'éclairage (6), dans la fonction de feu de plein jour, éclaire au moins une zone (12) qui se situe dans une zone sombre de la fonction de feu antibrouillard du premier groupe d'éléments d'éclairage.

5. Dispositif d'éclairage de véhicule (1 ; 13 ; 16) selon l'une quelconque des revendications précédentes, qui présente en outre, en plus de la fonction de feu antibrouillard et de la fonction de feu de plein jour, au plus une fonction de feu de route et/ou une fonction de feu de virage.

6. Dispositif d'éclairage de véhicule (1 ; 13 ; 16) selon l'une quelconque des revendications précédentes, dans lequel le premier groupe d'éléments d'éclairage (5 ; 14) et le deuxième groupe d'éléments d'éclairage (6) présentent une fonction de feu de route.

7. Dispositif d'éclairage de véhicule (1 ; 13 ; 16) selon l'une quelconque des revendications précédentes, comportant en outre un troisième groupe d'éléments d'éclairage et un quatrième groupe d'éléments d'éclairage ayant au moins un élément d'éclairage à semi-conducteurs, qui présentent une fonction de feu de virage pour un mouvement de braquage respectif en sens opposé.

8. Dispositif d'éclairage de véhicule (1 ; 13 ; 16) selon l'une quelconque des revendications précédentes, dans lequel l'au moins un élément d'éclairage à semi-conducteurs comprend au moins une puce de diode électroluminescente (7 ; 8) et dans lequel, pour au moins deux des groupes d'éléments d'éclairage (5 ; 6 ; 174), des éléments d'éclairage à semi-conducteurs de conceptions différentes sont utilisés.

9. Dispositif d'éclairage de véhicule (1 ; 13 ; 16) selon la revendication 8, dans lequel, pour au moins deux groupes d'éléments d'éclairage (5 ; 6 ; 14), des puces de diodes électroluminescentes (7 ; 8) ayant des surfaces d'émission de tailles différentes sont utilisées.

10. Dispositif d'éclairage de véhicule (1 ; 13 ; 16) selon l'une quelconque des revendications précédentes, dans lequel les éléments d'éclairage à semi-conducteurs (7 ; 8) d'au moins deux groupes d'éléments d'éclairage (5 ; 6) sont respectivement disposés dans au moins une rangée et les rangées desdits groupes d'éléments d'éclairage (5 ; 6) sont disposées les unes en-dessous des autres dans un agencement horizontal parallèlement les unes aux autres.

11. Dispositif d'éclairage de véhicule (1 ; 13 ; 16) selon l'une quelconque des revendications précédentes, dans lequel une zone d'éclairage (15) du premier groupe d'éléments d'éclairage (14) est asymétrique par rapport à une extension latérale.

12. Dispositif d'éclairage de véhicule (1 ; 13 ; 16) selon l'une quelconque des revendications précédentes, dans lequel, lorsque le dispositif d'éclairage de véhicule (1 ; 13 ; 16) est activé conformément à au moins deux types d'éclairage, notamment conformément à la totalité des types d'éclairage, une charge électrique sensiblement identique des éléments d'éclairage à semi-conducteurs (7 ; 8) est observée.

13. Phare de véhicule comportant au moins un dispositif d'éclairage de véhicule (1 ; 13 ; 16) selon l'une quelconque des revendications précédentes.

14. Véhicule comportant au moins un phare de véhicule selon la revendication 13.
